# EUROPEAN PATENT APPLICATION

(11) **EP 4 668 732 A1**
(43) Date of publication of application: **24.12.2025**
(21) Application number: 25184249.8
(22) Date of filing: 20.06.2025
(51) Int. Cl.: H04N 17/00

(54) **METHOD OF DETERMINING FAULT IN IMAGE SIGNAL PROCESSOR AND IMAGE PROCESSING DEVICE FOR PERFORMING THE SAME**

(30) Priority: 20.06.2024 KR 20240080496; 02.08.2024 KR 20240103235
(71) Applicant: Nextchip Co., Ltd., Seongnam-si, Gyeonggi-do 13494 (KR)
(72) Inventor: CHON, Woo E, 08735 Seoul (KR)
(74) Representative: Gill Jennings & Every LLP

(57) **Abstract**

Disclosed is a method of determining an image signal processor (ISP) fault, performed by an image processing device. The method includes receiving a first raw image signal that is at least a portion of an image signal captured by an image sensor of a first camera, based on the first raw image signal and a first input test signal, generating a first input signal, generating, by a first ISP, a first output signal by processing the first input signal, obtaining a first output test signal corresponding to the first input test signal from the first output signal, and based on the first output test signal, determining whether a fault occurs in the first ISP.

## Description

### CROSS-REFERENCE TO RELATED APPLICATION

This application claims the benefit of Korean Patent Application No. 10-2024-0080496, filed on June 20, 2024, and Korean Patent Application No. 10-2024-0103235, filed on August 2, 2024, in the Korean Intellectual Property Office, the entire disclosure of which is incorporated herein by reference for all purposes.

### BACKGROUND

### 1. Field of the Invention

One or more embodiments relate to a technique for processing an image signal, and more particularly, to a technique for processing a raw image signal using a plurality of image signal processors (ISPs).

### 2. Description of the Related Art

An image signal processor (ISP) may generate an image by receiving and processing a raw image signal captured by an image sensor of a camera. The image generated by the ISP may be output on a display or used for an additional function. For example, an image generated based on a raw image signal obtained by a camera mounted on a vehicle may be transmitted to an engine control unit (ECU) or a vehicle control unit (VCU) of the vehicle and used for the functions of advanced driver assistance systems (ADAS). When a fault occurs in an ISP, an image generated by the ISP may also be inaccurate, causing an issue with ADAS functions that rely on the inaccurate image.

### SUMMARY

Embodiments provide a method of generating a signal to be input to an image signal processor (ISP) of an image processing device based on a raw image signal and an input test signal.

Embodiments provide a method of determining whether a fault occurs in an ISP of an image processing device based on a signal output from the ISP.

However, the technical goals are not limited to the foregoing goals, and there may be other technical goals.

According to an embodiment, a method of determining ISP fault, performed by an image processing device, includes receiving a first raw image signal that is at least a portion of an image signal captured by an image sensor of a first camera, based on the first raw image signal and a first input test signal, generating a first input signal, generating, by a first ISP, a first output signal by processing the first input signal, obtaining a first output test signal corresponding to the first input test signal from the first output signal, and based on the first output test signal, determining whether a fault occurs in the first ISP.

The determining of whether the fault occurs in the first ISP, based on the first output test signal, may include obtaining a first test value by processing the first output test signal, obtaining a first target value corresponding to the first input test signal, determining whether the first test value corresponds to the first target value, and when the first test value fails to correspond to the first target value, determining that a fault occurs in the first ISP.

The first target value may be generated by a processor comprised in the image processing device.

The first target value may be generated based on the first input test signal and one or more register values for the first ISP.

The generating of the first input signal, based on the first raw image signal and the first input test signal, may include obtaining a test pattern activation signal corresponding to a portion of a vertical blanking interval (VBI) of the first raw image signal and based on the first raw image signal, the first input test signal, and the test pattern activation signal, generating the first input signal.

The first input test signal may include a plurality of lines.

The first input test signal may include a dummy line comprising at least one line, and the obtaining of the first output test signal corresponding to the first input test signal from the first output signal may include obtaining a first decomposed output signal corresponding to the first input test signal from the first output signal and obtaining, as the first output test signal, remaining lines obtained by excluding lines corresponding to the dummy line from the first decomposed output signal.

The generating of the first input signal, based on the first raw image signal and the first input test signal, may include obtaining a test pattern activation signal corresponding to a portion of a horizontal blanking interval (HBI) of the first raw image signal and based on the first raw image signal, the first input test signal, and the test pattern activation signal, generating the first input signal.

The first input test signal may include a plurality of samples.

The first input test signal may include a dummy sample comprising at least one sample, and the obtaining of the first output test signal corresponding to the first input test signal from the first output signal may include obtaining a first decomposed output signal corresponding to the first input test signal from the first output signal and obtaining, as the first output test signal, remaining pixels obtained by excluding dummy pixels corresponding to the dummy sample from pixels of the first decomposed output signal.

The method may further include, based on a second raw image signal and the first input test signal, generating a second input signal, generating, by a second ISP, a second output signal by processing the second input signal, and obtaining a second output test signal corresponding to the first input test signal from the second output signal, wherein the determining of whether the fault occurs in the first ISP, based on the first output test signal, may include, based on the first output test signal and the second output test signal, determining whether a fault occurs in at least one of the first ISP and the second ISP.

According to an embodiment, an image processing device includes an input signal generation circuit configured to receive a first raw image signal that is at least a portion of an image signal captured by an image sensor of a first camera and generate, based on the first raw image signal and a first input test signal, a first input signal, a first ISP configured to generate a first output signal by processing the first input signal, and a fault detection circuit configured to obtain a first output test signal corresponding to the first input test signal from the first output signal and determine, based on the first output test signal, whether a fault occurs in the first ISP.

The image processing device may further include a decomposite circuit configured to obtain, based on the first output signal, a first image signal corresponding to the first raw image signal and the first output test signal corresponding to the first input test signal.

The image processing device may further include a second ISP configured to generate a second output signal by processing a second input signal, wherein the input signal generation circuit may be configured to generate, based on the first raw image signal and the first input test signal, the second input signal, and wherein the fault detection circuit may be configured to obtain a second output test signal corresponding to the first input test signal from the second output signal and determine, based on the first output test signal and the second output test signal, whether a fault occurs in at least one of the first ISP and the second ISP.

According to an embodiment, a method of determining an ISP fault, performed by an image processing device, includes receiving, by an input interface, a first raw image signal that is at least a portion of an image signal captured by an image sensor of a first camera, based on the first raw image signal and a first input test signal, generating, by an input signal generation circuit, a first input signal, generating, by a first ISP, a first output signal by processing the first input signal, obtaining, by a fault detection circuit, a first output test signal corresponding to the first input test signal from the first output signal, obtaining, by the fault detection circuit, a first test value by processing the first output test signal, obtaining, by the fault detection circuit, a first target value corresponding to the first input test signal, and based on the first target value and the first test value, determining, by the fault detection circuit, whether a fault occurs in the first ISP.

The method may further include, based on the first input test signal and one or more register values for the first ISP, generating, by a target value generation circuit, the first target value.

The obtaining, by the fault detection circuit, of the first target value corresponding to the first input test signal may include obtaining, by the fault detection circuit, the first input test signal, obtaining, by the fault detection circuit, one or more register values for the first ISP, and based on the first input test signal and the one or more register values, obtaining, by the fault detection circuit, the first target value.

The method of claim 16 may further include, based on a second raw image signal and the first input test signal, generating, by the input signal generation circuit, a second input signal, generating, by a second ISP, a second output signal by processing the second input signal, and obtaining, by the fault detection circuit, a second output test signal corresponding to the first input test signal from the second output signal, wherein the obtaining, by the fault detection circuit, of the first target value corresponding to the first input test signal may include obtaining the first target value by processing the second output test signal, and wherein the determining, by the fault detection circuit, of whether the fault occurs in the first ISP, based on the first target value and the first test value, may include, when the first target value and the first test value fail to correspond to each other, determining that a fault occurs in at least one of the first ISP and the second ISP.

The obtaining, by the fault detection circuit, of the first test value by processing the first output test signal may include obtaining, by the fault detection circuit, a cyclic redundancy check (CRC) code for the first output test signal or a secure has algorithm (SHA) hash.

According to an embodiment, an image processing device that may input a signal including at least a portion of a raw image signal and an input test signal to an ISP of the image processing device may be provided.

According to an embodiment, a method of detecting a fault occurring in at least one ISP of an image processing device by obtaining an output test signal corresponding to an input test signal from a signal output from an ISP may be provided.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a configuration of an image signal processing system according to an embodiment;
FIG. 2 is a configuration of an image processing device according to an embodiment;
FIG. 3 is a flowchart of a method of detecting an image signal processor (ISP) fault, according to an embodiment;
FIG. 4 is a configuration of an input signal generation circuit according to an embodiment;
FIG. 5 is a flowchart of a method of generating a signal input to an ISP, according to an embodiment;
FIG. 6 illustrates a raw image signal, an input test signal, a test pattern activation signal, and an input signal, according to an embodiment;
FIG. 7 is a flowchart of a method of obtaining an output test signal from a signal output from an ISP, according to an embodiment;
FIG. 8 illustrates a raw image signal, an input test signal, a test pattern activation signal, and an input signal, according to an embodiment;
FIG. 9 is a flowchart of a method of generating a signal input to an ISP, according to an embodiment;
FIG. 10 illustrates a raw image signal, an input test signal, a test pattern activation signal, and an input signal, according to an embodiment;
FIG. 11 is a flowchart of a method of obtaining an output test signal from a signal output from an ISP, according to an embodiment;
FIG. 12 illustrates a raw image signal, an input test signal, a test pattern activation signal, and an input signal, according to an embodiment;
FIG. 13 is a flowchart of a method of determining whether a fault occurs in a first ISP, based on a first test value and a first target value, according to an embodiment;
FIG. 14 is a flowchart of a method of determining whether a fault occurs in at least one of a first ISP and a second ISP, according to an embodiment;
FIG. 15 is a flowchart of a method of detecting an ISP fault according to an embodiment;
FIG. 16 is a flowchart of a method of generating, by a target value generation circuit, generating a first target value, based on one or more register values for an ISP, according to an embodiment;
FIG. 17 is a configuration of a fault detection circuit according to an embodiment;
FIG. 18 is a flowchart of a method of obtaining, by a fault detection circuit, a first target value, based on one or more register values for an ISP, according to an embodiment;
FIG. 19 is a configuration of a fault detection circuit according to an embodiment;
FIG. 20 is a flowchart of a method of obtaining, by a fault detection circuit, a method of obtaining a first target value by processing a second output test signal; and
FIG. 21 is a configuration of a fault detection circuit according to an embodiment.

### DETAILED DESCRIPTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms including technical and scientific terms used herein have the same meaning as commonly understood by one of ordinary skill in the art to which embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one component from another component, and the nature, the sequences, or the orders of the components are not limited by the terms. When one component is described as being "connected", "coupled", or "attached" to another component, it should be understood that one component may be connected or attached directly to another component, and an intervening component may also be "connected", "coupled", or "attached" to the components.

The same name may be used to describe an element included in the embodiments described above and an element having a common function. Unless stated otherwise, the description of an embodiment may be applicable to other embodiments, and a repeated description related thereto is omitted.

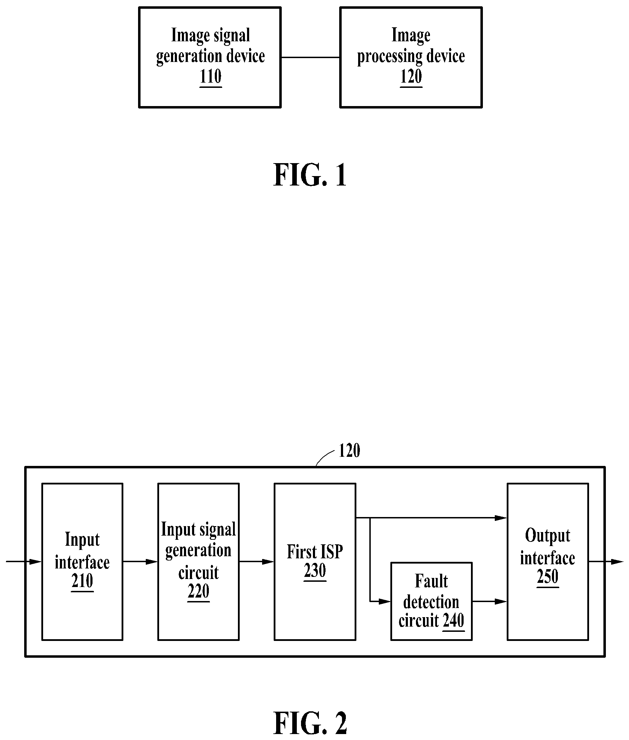

FIG. 1 is a configuration of an image signal processing system according to an embodiment.

According to an embodiment, the image signal processing system may include an image signal generation device 110 and an image processing device 120.

The image signal generation device 110 may generate a raw image signal through an image sensor that may obtain information about an external environment. For example, the image signal generation device 110 may include a camera and generate a signal captured by an image sensor of the camera as a raw image signal.

The image sensor of the image signal generation device 110 may receive light from the outside, divide the color of the received light through a color filter array (CFA), and generate an analog signal for the light received from the outside by detecting the intensity of the light for the divided colors through photodiodes. For example, a pattern of the CFA included in the image signal generation device 110 may be a Bayer pattern, a red-green-blue-infrared (RGBIR) pattern, a red-clear-clear-blue (RCCB) pattern, a red-yellow-yellow-cyan (RYYCy) pattern, or the like.

According to an embodiment, the image signal generation device 110 may transmit the analog signal for the light received from the outside as a raw image signal to the image processing device 120. The raw image signal may include analog signals of a plurality of lines (e.g., horizontal lines) corresponding to the photodiode array of the image sensor.

The image signal generation device 110 may transmit the raw image signal, which is an analog signal, to the image processing device 120 via a coaxial cable. When the coaxial cable is used for signal transmission, it may be possible to transmit massive data by utilizing a high bandwidth and minimize signal interference.

According to an embodiment, the image signal generation device 110 may include a plurality of cameras. For example, an image sensor included in each of the plurality of cameras may have different CFA patterns. As the same scene is captured by cameras with different CFA patterns, visual information required for a particular situation may be obtained smoothly. For example, in a low-light situation, an image generated based on an IR-based first CFA pattern may be used to detect an object instead of an image generated based on an RGB-based first CFA pattern.

According to an embodiment, the image signal processing system may include a plurality of image signal generation devices 110. For example, a first image signal generation device may be connected to the image processing device 120 via a first coaxial cable, and a second image signal generation device may be connected to the image processing device 120 via a second coaxial cable. Each of the plurality of image signal generation devices may generate a raw image signal and transmit the generated raw image signal to the image processing device 120.

FIG. 2 is a configuration of an image processing device according to an embodiment.

According to an embodiment, the image processing device 120 may include an input interface 210, an input signal generation circuit 220, a first ISP 230, a fault detection circuit 240, and an output interface 250.

The input interface 210 may be connected to another external device and transmit and receive data to and from the external device. Hereinafter, transmitting and receiving "A" may refer to transmitting and receiving "information or data indicating A".

The input interface 210 may be implemented as circuitry within the image processing device 120. For example, the input interface 210 may include an internal bus and an external bus. In another example, the input interface 210 may be an element that connects the image processing device 120 to an external device. The input interface 210 may be connected to the image signal generation device 110 via a coaxial cable. The input interface 210 may receive data from an external device and transmit the data to the input signal generation circuit 220, the first ISP 230, the fault detection circuit 240, and the output interface 250.

The input interface 210 may transmit the raw image signal received from the image signal generation device 110 to the input signal generation circuit 220.

The arrows illustrated in FIG. 2 only represent a portion of a flow of signal processing performed by the image processing device 120, and connections among components of the image processing device 120 or a flow of signal processing is not limited to the arrows illustrated in FIG. 2. For example, the input interface 210 may be connected to the first ISP 230 and bypass the input signal generation circuit 220.

The input signal generation circuit 220 may receive a first raw image signal of an image signal captured by an image sensor of a first camera. The first raw image signal may be a signal that is input to the first ISP 230 among raw image signals input to the input interface 210 may be a signal that may be received by the input signal generation circuit 220 through an operation clock input to the input signal generation circuit 220.

The input signal generation circuit 220 may generate a first input signal based on the first raw image signal and a first input test signal. The first input test signal may be a signal input to the first ISP 230 along with the first raw image signal to detect a functional fault of an ISP. For example, the first input test signal may be generated by a test pattern generation circuit included in the input signal generation circuit 220. For example, the first input test signal may be generated by a processor included in the image processing device 120 and input to the input signal generation circuit 220.

According to an embodiment, the input signal generation circuit 220 may generate the first input signal by inserting the first input test signal to a vertical blanking interval (VBI) or a horizontal blanking interval (HBI) of the first raw image signal, based on the received test pattern activation signal. As the first input test signal is input to a VBI or a HBI in which data on the first raw image signal does not exist, the data on the first raw image signal in the first input signal may remain intact.

The first ISP 230 may process data (e.g., the first input signal) received from the input signal generation circuit 220 and data stored in memory. A "processor" may be a data processing device implemented by hardware including a circuit having a physical structure to perform desired operations. For example, the desired operations may include, for example, code or instructions in a program. For example, the hardware-implemented data processing device may include a microprocessor, a central processing unit (CPU), a processor core, a multi-core processor, a multiprocessor, an application-specific integrated circuit (ASIC), and a field-programmable gate array (FPGA).

The first ISP 230 may execute instructions triggered by computer-readable code (e.g., software) stored in memory and by one of the processors included in the image processing device 120.

The first ISP 230 may generate an image by processing a raw image signal or an input signal. For example, the first ISP 230 may generate an image with an RGB or YUV color space by processing the raw image signal. The first ISP 230 may generate a first output signal by processing the first input signal, which is generated based on the first raw image signal and the first input test signal. The first output signal may include a first image corresponding to the first raw image signal and a first output test signal corresponding to the first input test signal.

According to an embodiment, the first ISP 230 may process raw image signals generated to respectively correspond to image sensors including different CFA patterns. When the first ISP 230 has a multi-CFA processing function that allows the first ISP 230 to handle various CFA patterns regardless of a predetermined CFA pattern of a camera, the image processing device 120 may generate an image suitable for a predetermined situation by processing the raw image signal generated by the image signal generation device 110, regardless of the CFA patterns of the camera.

According to an embodiment, when the image processing device 120 is required to process a large number of raw image signals in real time, the image processing device 120 may use a plurality of ISPs (e.g., the first ISP 230 and a second ISP) simultaneously to process the raw image signals. For example, when the image processing device 120 includes the plurality of ISPs (e.g., the first ISP 230 and the second ISP), the input signal generation circuit 220 may generate an input signal to be input to each of the ISPs (e.g., the first ISP 230 or the second ISP). For example, when the image processing device 120 includes the plurality of ISPs (e.g., the first ISP 230 and the second ISP), the image processing device 120 may include a plurality of input signal generation circuits 220 respectively corresponding to the ISPs (e.g., the first ISP 230 and the second ISP).

When the image processing device includes the plurality of ISPs (e.g., the first ISP 230 and the second ISP), the descriptions of the first ISP 230 may similarly be modified and applied to other ISPs (e.g., the second ISP).

The fault detection circuit 240 may obtain the first output test signal corresponding to the first input test signal from the first output signal. For example, the image processing device 120 may further include a decomposite circuit that obtains a first image signal corresponding to the first raw image signal and the first output test signal corresponding to the first input test signal, based on the first output signal, and the fault detection circuit 240 may obtain the first output test signal obtained from the decomposite circuit.

The fault detection circuit 240 may determine whether a fault occurs in the first ISP 230 based on the first output test signal. Since the first input test signal is a predetermined signal, a first target signal that is output when the first input test signal is input to a normally operating first ISP 230 may be predicted. For example, when the first output test signal does not correspond to the first target signal, the fault detection circuit 240 may determine that a fault occurs in the first ISP 230. For example, when the first test value obtained as the fault detection circuit 240 processes the first output test does not correspond to a first target value corresponding to the first target signal, the fault detection circuit 240 may determine that a fault occurs in the first ISP 230.

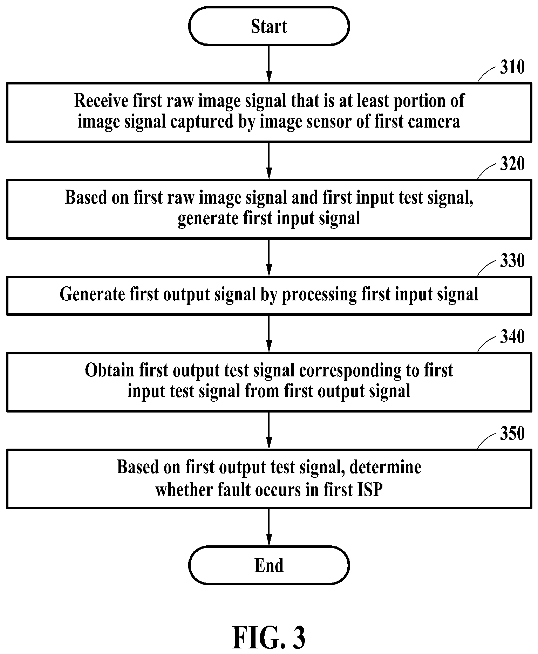

A method by which the image processing device 120 determines a fault in the first ISP 230 using the fault detection circuit 240 is described in detail below with reference to FIGS. 3 to 21.

According to an embodiment, when determining that a fault occurs in the first ISP 230, the fault detection circuit 240 may transmit a signal indicating that a fault occurs in the first ISP 230 to the output interface 250. For example, when the first image output from the image processing device 120 is used for an advanced driver assistance system (ADAS) function of a vehicle, the fault detection circuit 240 may transmit a signal that stops the use of the ADAS function based on the first image to an external device through the output interface 250. For example, the external device may be an engine control unit (ECU) or a vehicle control unit (VCU), and embodiments are not limited thereto.

According to an embodiment, when the image processing device 120 includes a plurality of ISPs and it is determined that a fault occurs in some of the plurality of ISPs, the fault detection circuit 240 may transmit information about an ISP in which a fault occurs or a normally operating ISP to the input interface 210. The input interface 210 may exclude an ISP in which a fault occurs from the plurality of ISPs and transmit raw image signals respectively corresponding to normally operating ISPs. As the raw image signal received by the image processing device is redistributed to normally operating ISPs, an image corresponding to the raw image signal may be generated. For example, when the amount of data (or the number of samples) in the raw image signal exceeds the amount of data that the normally operating ISPs may process, the input interface 210 may reduce the resolution of the raw image signal and generate a first raw image signal and a second raw image signal for the reduced-resolution raw image signal.

The output interface 250 may be connected to an external device to transmit and receive data to and from the external device. For example, the output interface 250 may be connected to a display. For example, the output interface 250 may be connected to an additional processor, such as an ECU or a VCU of a vehicle. For example, the ECU or the VCU may use a received first image to perform a function of an ADAS. According to an embodiment, the output interface 250 may include a plurality of output terminals connected to a plurality of external devices.

The output interface 250 may be implemented as circuitry in the image processing device 120. For example, the output interface 250 may include an internal bus and an external bus. In another example, the output interface 250 may be an element that connects the image processing device 120 to an external device.

FIG. 3 is a flowchart of a method of detecting an ISP fault, according to an embodiment.

Operations 310 to 350 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a fault detection circuit (e.g., the fault detection circuit 240 of FIG. 2), and an output interface (e.g., the output interface 250 of FIG. 2).

In operation 310, the input signal generation circuit may receive a first raw image signal that is at least a portion of an image signal captured by an image sensor of a first camera. For example, the input signal generation circuit may receive the first raw image signal through the input interface.

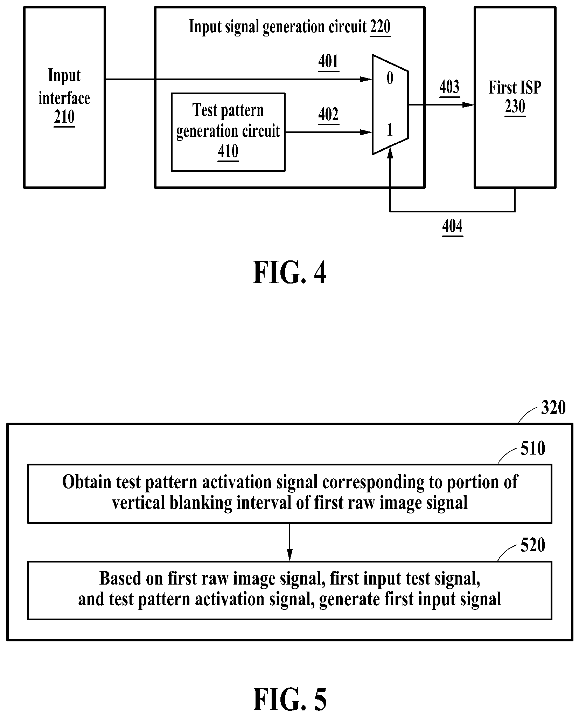

In operation 320, the input signal generation circuit may generate a first input signal based on the first raw image signal and a first input test signal. For example, the input signal generation circuit may generate the first input signal by inserting the first input test signal to a VBI or an HBI of the first raw image signal, based on a received test pattern activation signal. An operation in which the input signal generation circuit generates the first input signal is described in detail with reference to FIGS. 4 to 12.

In operation 330, the first ISP may generate a first output signal by processing the first input signal. For example, the first ISP may generate the first output signal with an RGB or YUV color space by processing the first input signal.

In operation 340, the fault detection circuit may obtain a first output test signal corresponding to the first input test signal from the first output signal.

According to an embodiment, the image processing device may include a decomposite circuit that obtains a first image signal corresponding to the first raw image signal and the first output test signal corresponding to the first input test signal, based on the first output signal. The fault detection circuit may obtain the first output test signal using the decomposite circuit. For example, the decomposite circuit may be included in the first ISP and positioned at an output terminal of the first ISP. For example, the decomposite circuit may be positioned between the first ISP, the fault detection circuit, and the output interface. For example, the decomposite circuit may be included in the fault detection circuit and positioned at an input terminal of the fault detection circuit.

In operation 350, the fault detection circuit may determine whether a fault occurs in the first ISP based on the first output test signal. Since the first input test signal is a predetermined signal, a first target signal that is output when the first input test signal is input to a normally operating first ISP may be predicted. For example, the fault detection circuit may determine whether a fault occurs in the first ISP by comparing the first target signal with the first output test signal. For example, the fault detection circuit may determine whether a fault occurs in the first ISP by comparing a first test value obtained by processing the first output test signal with a first target value corresponding to the first target signal.

FIG. 4 is a configuration of an input signal generation circuit according to an embodiment.

According to an embodiment, the input signal generation circuit 220 may include a test pattern generation circuit 410 and a multiplexer (MUX) 420. The input signal generation circuit 220 may generate a first input signal based on a first raw image signal and a first input test signal.

The test pattern generation circuit 410 may generate a first input test signal 402. The test pattern generation circuit 410 may repeatedly generate the same first input test signal 402 or generate a different first input test signal 402 for each frame or each line of a first raw image signal 401.

According to a modified embodiment, the input signal generation circuit 220 may not include the test pattern generation circuit 410 and receive the first input test signal 402 generated by a processor included in an image processing device.

The MUX 420 may output the first raw image signal 401 or the first input test signal 402 as a first input signal 403 based on a test pattern activation signal 404. For example, during an interval in which the test pattern activation signal 404 is deactivated, the first raw image signal 401 may be output, and during an interval in which the test pattern activation signal 404 is activated, the first input test signal 402 may be output.

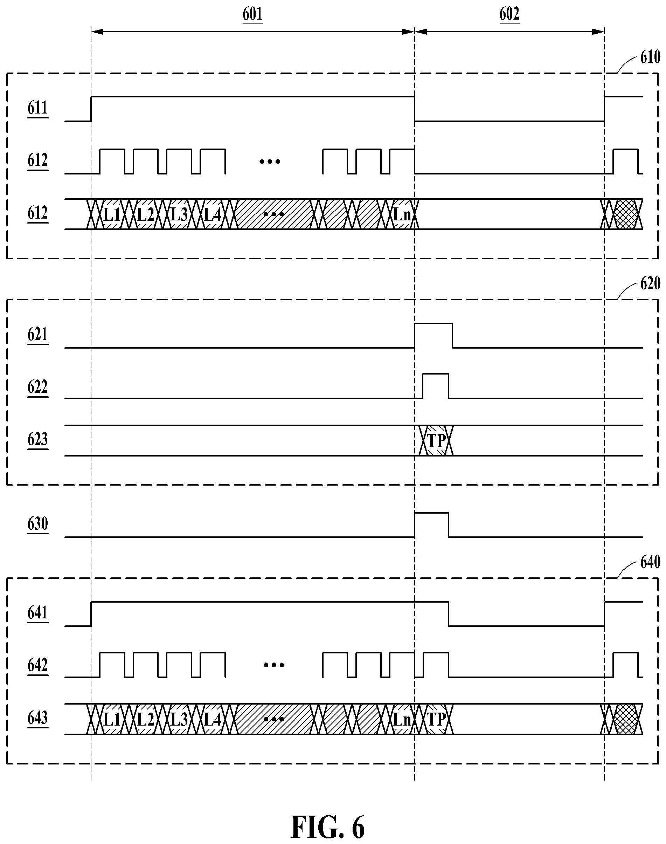

FIG. 5 is a flowchart of a method of generating a signal input to an ISP, according to an embodiment. FIG. 6 illustrates a raw image signal, an input test signal, a test pattern activation signal, and an input signal, according to an embodiment.

According to an embodiment, operations 510 and 520 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a fault detection circuit (e.g., the fault detection circuit 240 of FIG. 2), and an output interface (e.g., the output interface 250 of FIG. 2). For example, operation 320 described above with reference to FIG. 3 may include operations 510 and 520.

In operation 510, the fault detection circuit may obtain a test pattern activation signal 630 corresponding to a portion of a VBI of a first raw image signal 610.

An image signal captured by an image sensor of a first camera may correspond to a single frame. The image signal may include a plurality of lines. Referring to FIG. 6, the first raw image signal 610, which is at least a portion of the image signal, may include n lines. For example, these n lines may be at least a portion of active lines. The first raw image signal 610 may include data on a plurality of lines L1, L2, ..., and Ln included in the first raw image signal 610 in a vertical activation region 601 in which a vertical synchronization signal 611 is activated. A data arrangement 613 of the first raw image signal 610 may sequentially include values related to the respective lines L1, L2, ..., and Ln in response to a horizontal synchronization signal 612.

The test pattern activation signal 630 may correspond to a portion of the VBI 602 in which the vertical synchronization signal 611 is deactivated. The data arrangement 613 of the first raw image signal 610 may not include data in the VBI 602.

In operation 520, the fault detection circuit may generate a first input signal 640 based on the first raw image signal 610, a first input test signal 620, and the test pattern activation signal 630. For example, an MUX (e.g., the MUX 420 of FIG. 4) of the fault detection circuit may generate the first input signal 640 by outputting the first raw image signal 610 during an interval in which the test pattern activation signal 630 is deactivated and outputting the first input test signal 620 during an interval in which the test pattern activation signal 630 is activated.

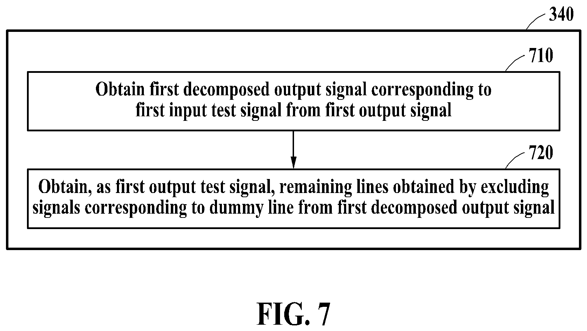

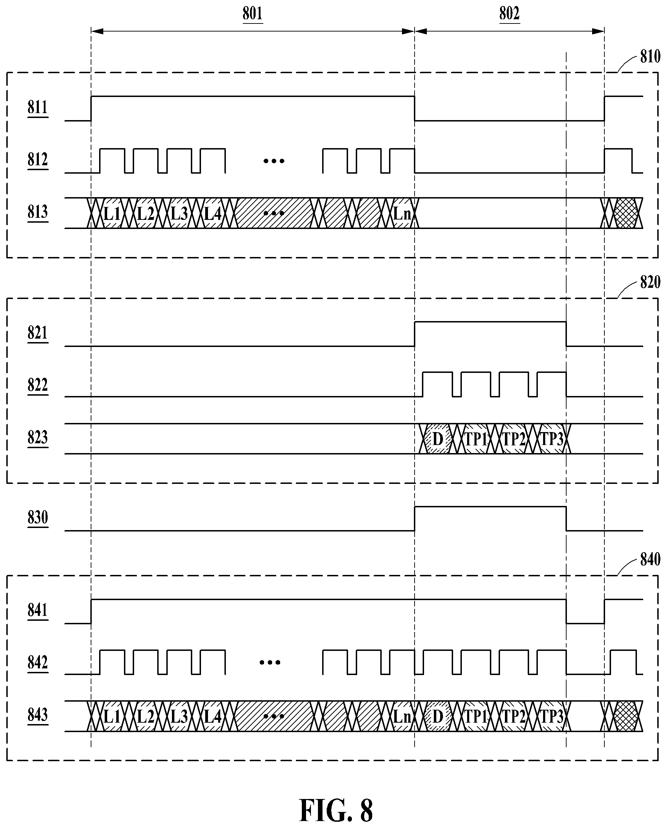

The first input test signal 620 may include one or more lines. For example, as illustrated in FIG. 6, the first input test signal 620 may include a single line. For example, the first input test signal 620 may include a plurality of lines. For example, the first input test signal may include a dummy line. The dummy line may be included in the first input signal and input to the first ISP. However, a signal corresponding to the dummy line in the first output signal may be excluded from an operation in which the fault detection circuit determines whether a fault occurs in the ISP or an operation in which the output interface outputs the image signal. The plurality of lines and the first input test signal 620 including the dummy line are described in detail below with reference to FIGS. 7 and 8.

Referring to FIG. 6, the first input test signal 620 may have a vertical synchronization signal 621 that is activated during a portion of the interval 602 where the vertical synchronization signal 611 of the first raw image signal 610 is deactivated. The first input test signal 620 may include data on one or more lines TP included in a test pattern during an interval in which the vertical synchronization signal 621 is activated. A data arrangement 623 of the first input test signal 620 may sequentially include values related to the one or more lines TP included in the test pattern in response to a horizontal synchronization signal 622.

The first input signal 640 may include the first raw image signal 610 during an interval in which the test pattern activation signal 630 is deactivated and include the first input test signal 620 during an interval in which the test pattern activation signal 630 is activated. A vertical synchronization signal 641 of the first input signal 640 may be a signal obtained by combining the vertical synchronization signal 611 of the first raw image signal 610 with the vertical synchronization signal 621 of the first input test signal 620. A horizontal synchronization signal 642 of the first input signal 640 may be a signal obtained by combining the horizontal synchronization signal 612 of the first raw image signal 610 with the horizontal synchronization signal 622 of the first input test signal 620. The data arrangement of the first input signal 640 may sequentially include values related to the respective lines L1, L2, ..., and Ln included in the first raw image signal 610 and values related to the one or more lines TP included in the test pattern, in response to the horizontal synchronization signal 642.

FIG. 7 is a flowchart of a method of obtaining an output test signal from a signal output from an ISP, according to an embodiment. FIG. 8 illustrates a raw image signal, an input test signal, a test pattern activation signal, and an input signal, according to an embodiment.

According to an embodiment, operations 710 and 720 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a fault detection circuit (e.g., the fault detection circuit 240 of FIG. 2), and an output interface (e.g., the output interface 250 of FIG. 2). For example, operation 340 described above with reference to FIG. 3 may be performed after operation 320 including operations 510 and 520 described above with reference to FIG. 5 and may include operations 710 and 720.

A first input test signal 820 may include a dummy line D including at least one line. The dummy line D may be included in a first input signal 840 and input to the first ISP. However, a signal corresponding to the dummy line D in a first output signal may be excluded from an operation in which the fault detection circuit determines whether a fault occurs in the ISP or an operation in which the output interface outputs an image signal. When the first output signal is generated by the first ISP based on the first input signal 840, a value of a pixel at a first point of the first output signal may reflect values of samples from points adjacent to the first point. When an output signal for a region in which a first raw image signal 810 and the first input test signal 820 are adjacent to each other is generated from the first output signal, an inaccurate image may be generated in a boundary region of a first image as the determination of values of pixels related to points adjacent to a boundary region of the first raw image signal 810 is influenced by the first input test signal 820. An inaccurate signal may be generated in the boundary area of a first output test signal as some of values of samples at points adjacent to a boundary region of the first input test signal 820 are influenced by the first raw image signal 810. As a dummy line D inserted to the first input signal 840 prevents the first raw image signal 810 and the first input test signal 820 from affecting each other, an accurate first image and first output test signal may be generated.

The first input test signal 820 may include a dummy line D including one or more lines. For example, as illustrated in FIG. 8, the first input test signal 820 may include the dummy line D including a single line. For example, the first input test signal 820 may include the dummy line D including a plurality of lines.

Referring to FIG. 8, the first raw image signal 810 may include data on a plurality of lines L1, L2, ..., and Ln included in the first raw image signal 810 in a vertical activation region 801 in which a vertical synchronization signal 811 is activated. A data arrangement 813 of the first raw image signal 810 may sequentially include values related to the respective lines L1, L2, ..., and Ln in response to a horizontal synchronization signal 812.

The first input test signal 820 may have a vertical synchronization signal 821 that is activated during a portion of an interval 802 in which the vertical synchronization signal 811 of the first raw image signal 810 is deactivated. The first input test signal 820 may include data on the dummy line D and one or more lines TP1, TP2, and TP3 included in a test pattern during an interval in which the vertical synchronization signal 821 is activated. A data arrangement 823 of the first input test signal 820 may sequentially include values related to the dummy line D and the one or more lines TP1, TP2, and TP3 included in the test pattern in response to a horizontal synchronization signal 822.

A test pattern activation signal 830 may correspond to a portion of the VBI 802 in which the vertical synchronization signal 811 is deactivated.

A vertical synchronization signal 841 of the first input signal 840 may be a signal obtained by combining the vertical synchronization signal 811 of the first raw image signal 810 with the vertical synchronization signal 821 of the first input test signal 820. A horizontal synchronization signal 842 of the first input signal 840 may be a signal obtained by combining the horizontal synchronization signal 812 of the first raw image signal 810 with the horizontal synchronization signal 822 of the first input test signal 820. A data arrangement 843 of the first input signal 840 may sequentially include, in response to the horizontal synchronization signal 842, values related to the respective lines L1, L2, ..., and Ln included in the first raw image signal 810 and values related to the one or more lines TP1, TP2, and TP3 included in the test pattern and the dummy line D.

In operation 710, the fault detection circuit may obtain a first decomposed output signal corresponding to the first input test signal 820 from the first output signal. The first decomposed output signal may include lines corresponding to the dummy line D and lines corresponding to the one or more lines TP1, TP2, and TP3 included in the test pattern.

In operation 720, the fault detection circuit may obtain, as the first output test signal, remaining lines obtained by excluding signals corresponding to the dummy line D from the first decomposed output signal. As the lines corresponding to the dummy line D are excluded from the first decomposed output signal, lines corresponding to the one or more lines TP1, TP2, and TP3 included in the test pattern may be obtained as the first output test signal.

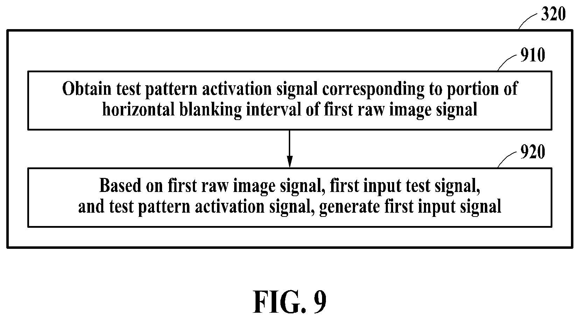

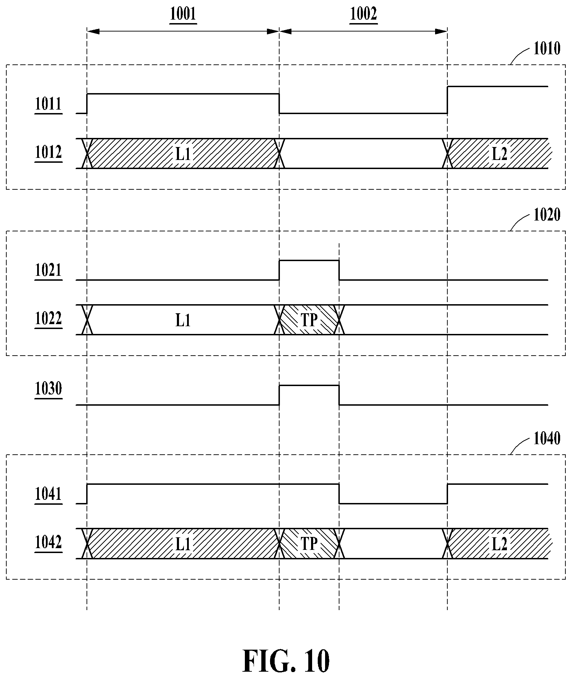

FIG. 9 is a flowchart of a method of generating a signal input to an ISP, according to an embodiment. FIG. 10 illustrates a raw image signal, an input test signal, a test pattern activation signal, and an input signal, according to an embodiment.

According to an embodiment, operations 910 and 920 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a fault detection circuit (e.g., the fault detection circuit 240 of FIG. 2), and an output interface (e.g., the output interface 250 of FIG. 2). For example, operation 320 described above with reference to FIG. 3 may include operations 910 and 920.

In operation 910, the fault detection circuit may obtain a test pattern activation signal 1030 corresponding to a portion of an HBI of a first raw image signal 1010.

An image signal captured by an image sensor of a first camera may correspond to a single frame. The image signal may include a plurality of lines. Referring to FIG. 10, the first raw image signal 1010, which is at least a portion of the image signal, may include data on a first line L1 in a horizontal activation region 1001 in which a horizontal synchronization signal 1011 is activated. A data arrangement 1012 of the first raw image signal 1010 may sequentially include values related to a plurality of samples included in the first line L1 in response to the horizontal synchronization signal 1011. For example, the first line L1 may be one of active lines.

The test pattern activation signal 1030 may correspond to a portion of an HBI 1002 in which the horizontal synchronization signal 1011 is deactivated. The data arrangement 1012 of the first raw image signal 1010 may not include data in the VBI 602.

In operation 920, the fault detection circuit may generate a first input signal 1040 based on the first raw image signal 1010, a first input test signal 1020, and the test pattern activation signal 1030. For example, an MUX (e.g., the MUX 420 of FIG. 4) of the fault detection circuit may generate the first input signal 1040 by outputting the first raw image signal 1010 during an interval in which the test pattern activation signal 1030 is deactivated and outputting the first input test signal 1020 during an interval in which the test pattern activation signal 1030 is activated.

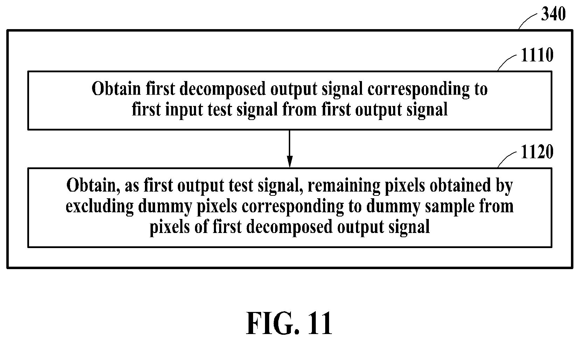

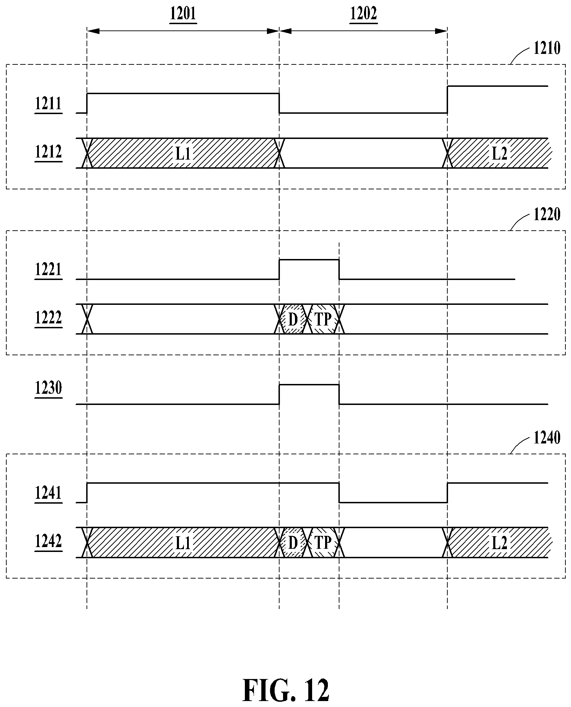

The first input test signal 1020 may include a plurality of samples. For example, the first input test signal may include a dummy sample. The dummy sample may be included in the first input signal and input to the first ISP. However, dummy pixels corresponding to the dummy sample in the first output signal may be excluded from an operation in which the fault detection circuit determines whether a fault occurs in an ISP or an operation in which the output interface outputs an image signal. The first input test signal 1020 including the dummy sample is described in detail below with reference to FIGS. 11 and 12.

Referring to FIG. 10, the first input test signal 1020 may have a horizontal synchronization signal 1021 that is activated during a portion of the interval 1002 in which the horizontal synchronization signal 1011 of the first raw image signal 1010 is deactivated. A data arrangement 1022 of the first input test signal 1020 may sequentially include values related to a plurality of samples TP included in the test pattern in response to the horizontal synchronization signal 1021.

The first input signal 1040 may include the first raw image signal 1010 during an interval in which the test pattern activation signal 1030 is deactivated and include the first input test signal 1020 during an interval in which the test pattern activation signal 1030 is activated. A horizontal synchronization signal 1041 of the first input signal 1040 may be a signal obtained by combining the horizontal synchronization signal 1011 of the first raw image signal 1010 with the horizontal synchronization signal 1021 of the first input test signal 1020. A data arrangement of the first input signal 1040 may sequentially include values related to the first line L1 included in the first raw image signal 1010 and values related to the plurality of samples TP included in the test pattern in response to the horizontal synchronization signal 1041.

FIG. 11 is a flowchart of a method of obtaining an output test signal from a signal output from an ISP, according to an embodiment. FIG. 12 illustrates a raw image signal, an input test signal, a test pattern activation signal, and an input signal, according to an embodiment.

According to an embodiment, operations 1110 and 1120 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a fault detection circuit (e.g., the fault detection circuit 240 of FIG. 2), and an output interface (e.g., the output interface 250 of FIG. 2). For example, operation 340 described above with reference to FIG. 3 may be performed after operation 320 including operations 910 and 920 described above with reference to FIG. 9 and may include operations 1110 and 1120.

A first input test signal 1220 may include a dummy sample D including at least one sample. The dummy sample D may be included in a first input signal 1240 and input to the first ISP. However, dummy pixels corresponding to the dummy sample D in the first output signal may be excluded from an operation in which the fault detection circuit determines whether a fault occurs in an ISP or an operation in which the output interface outputs an image signal. The description of the role of the aforementioned dummy line may be similarly modified and applied to the dummy sample D. As the dummy sample D inserted to the first input signal 1240 prevents a first raw image signal 1210 and the first input test signal 1220 from affecting each other, an accurate first image and first output test signal may be generated.

The first input test signal 1220 may include the dummy sample D including at least one sample.

Referring to FIG. 8, the first raw image signal 1210 may include data on the first line L1 in a horizontal activation region 1201 in which a horizontal synchronization signal 1211 is activated. A data arrangement 1212 of the first raw image signal 1210 may sequentially include values related to a plurality of samples included in the first line L1 in response to the horizontal synchronization signal 1211.

The first input test signal 1220 may have a horizontal synchronization signal 1221 that is activated during a portion of an interval 1202 in which the horizontal synchronization signal 1211 of the first raw image signal 1210 is deactivated. A data arrangement 1222 of the first input test signal 1220 may sequentially include values related to the dummy sample D and a plurality of samples TP included in the test pattern in response to the horizontal synchronization signal 1221.

A test pattern activation signal 1230 may correspond to a portion of the HBI 1202 in which the horizontal synchronization signal 1211 is deactivated.

A horizontal synchronization signal 1241 of the first input signal 1240 may be a signal obtained by combining the horizontal synchronization signal 1211 of the first raw image signal 1210 with the horizontal synchronization signal 1221 of the first input test signal 1220. A data arrangement 1242 of the first input signal 1240 may sequentially include values related to the samples related to the first line L1 included in the first raw image signal 1210 and the dummy sample D and the plurality of samples TP included in the test pattern in response to the horizontal synchronization signal 1241.

In operation 1110, the fault detection circuit may obtain a first decomposed output signal corresponding to the first input test signal 1220 from the first output signal. The first decomposed output signal may include dummy pixels corresponding to the dummy sample D and pixels corresponding to the plurality of samples TP included in the test pattern.

In operation 1120, the fault detection circuit may obtain, as a first output test signal, remaining pixels obtained by excluding the dummy pixels corresponding to the dummy sample D from the first decomposed output signal. As the dummy pixels corresponding to the dummy sample D are excluded from the first decomposed output signal, the pixels corresponding to the one or more samples TP included in the test pattern may be obtained as the first output test signal.

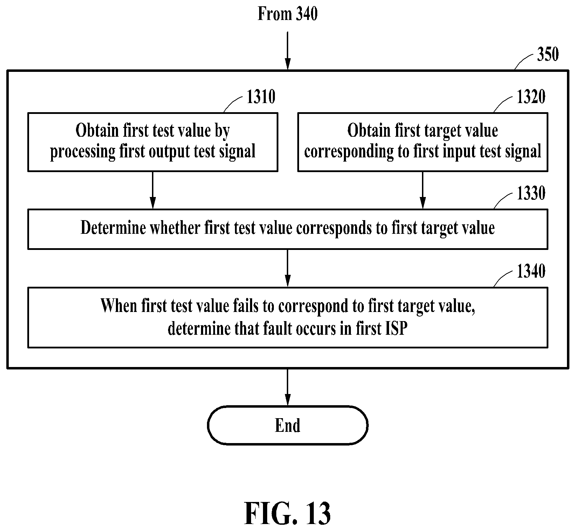

FIG. 13 is a flowchart of a method of determining whether a fault occurs in a first ISP, based on a first test value and a first target value, according to an embodiment.

According to an embodiment, operations 1310 to 1340 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a fault detection circuit (e.g., the fault detection circuit 240 of FIG. 2), and an output interface (e.g., the output interface 250 of FIG. 2). For example, operation 350 described above with reference to FIG. 3 may include operations 1310 to 1340.

In operation 1310, the fault detection circuit may obtain a first test value by processing a first output test signal. The first test value may be a error detection code determined in response to the first output test signal and generated by an algorithm that may verify the integrity of the first output test signal. For example, the first test value may be a CRC code or an SHA hash for the first output test signal, but the type of the error detection code is not limited to the above example as long as the error detection code changes in response to a change in the first output test signal.

In operation 1320, the fault detection circuit may obtain a first target value corresponding to a first input test signal. Since the first input test signal is a predetermined signal, when the first input test signal is input to the first ISP that operates normally, the first target signal may be predicted. The first target value may be a value obtained by processing the first target signal in the same manner as the first test value for the first output test signal is obtained. For example, the first target value may be generated by a processor included in the image processing device. For example, the first target value may be generated by the fault detection circuit.

In operation 1330, the fault detection circuit may determine whether the first test value corresponds to the first target value.

In operation 1340, when the first test value does not correspond to the first target value, it may be determined that a fault occurs in the first ISP. When the first test value does not correspond to the first target value, since the first ISP does not operate normally and the first output test signal differs from the first target signal, it may be determined that a fault occurs in the first ISP.

As unique identifiers (the first test value and the first target value) respectively corresponding to the first output test signal and the first target signal are generated and compared, the first output test signal and the first target signal may be compressed to determine whether the first output test signal and the first target signal correspond to each other.

According to an embodiment, the first target value may be generated based on the first input test signal and one or more register values for the first ISP. Various parameter values may be set for an ISP to process a raw image signal to generate an optimized image. Various parameter values may be stored (or set) in each of a plurality of registers included in the ISP. For example, the ISP may include registers storing values respectively corresponding to an exposure time, a gain, and an international organization for standardization (ISO) setting in relation to exposure information of an image. The first output test signal may vary based on one or more register values for the first ISP. As the first target value is generated based on the first input test signal and the one or more register values for the first ISP, the first target value corresponding to the first test value obtained by processing the first output test signal may be obtained. For example, the fault detection circuit may store information on a look-up table for the first target value corresponding to the first input test signal and the one or more register values for the first ISP. For example, the fault detection circuit may receive the first input test signal from the input signal generation circuit, receive the one or more register values for the first ISP from the first ISP, and obtain a first target value using a look-up table.

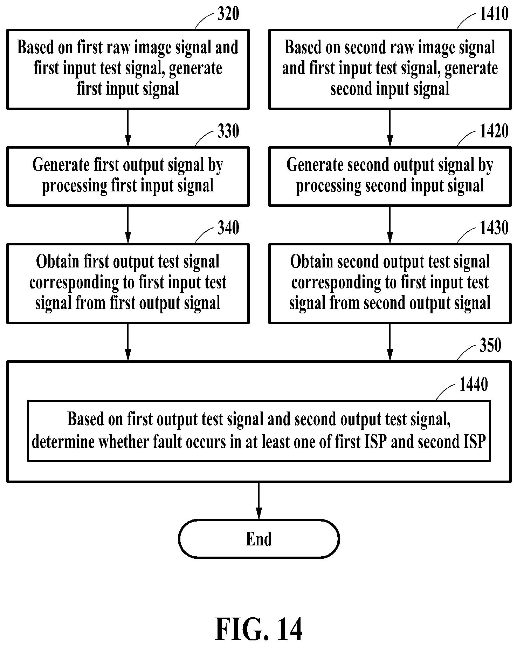

FIG. 14 is a flowchart of a method of determining whether a fault occurs in at least one of a first ISP and a second ISP, according to an embodiment.

According to an embodiment, operations 1410 to 1440 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a second ISP, a fault detection circuit (e.g., the fault detection circuit 240 of FIG. 2), and an output interface (e.g., the output interface 250 of FIG. 2). For example, operations 1410 to 1430 may be performed in parallel with operations 320 to 340 described above with reference to FIG. 3, and operation 350 described above with reference to FIG. 3 may include operation 1440.

According to an embodiment, when the image processing device is required to process a large number of raw image signals in real time, the image processing device may simultaneously use a plurality of ISPs (e.g., the first ISP and the second ISP) to process the raw image signals.

In operation 1410, the input signal generation circuit may generate a second input signal based on a second raw image signal and a first input test signal. For example, the input signal generation circuit may generate a first input signal input to the first ISP and the second input signal input to the second ISP. For example, the image processing device may include a plurality of input signal generation circuits that each generate a first input signal input to the first ISP and a second input signal input to the second ISP. The description of operation 320 described above with reference to FIG. 3 may be similarly modified and applied to the operation of generating the second input signal.

The input signal generation circuit may receive a second raw image signal through the input interface. For example, the image signal generation device (e.g., the image signal generation device 110 of FIG. 1) may include a plurality of cameras, and the second raw image signal may be at least a portion of an image signal captured by an image sensor of a second camera. For example, when the resolution of the image signal captured by an image sensor of a first camera is 3840 x 2160 (i.e., ultra-high definition (UHD) or 4K) and the data processing capability of the first ISP is 2560 x 1440 (i.e., Quad HD), the second raw image signal may be at least a portion of the image signal captured by the image sensor of the first camera. For example, when the image processing device operates in a fault check mode that checks whether the first ISP and the second ISP operate normally, the second raw image signal may be the same signal as a first raw image signal.

In operation 1420, the second ISP may generate a second output signal by processing the second input signal. For example, the second ISP may generate the second output signal having an RGB or YUV color space by processing the second input signal.

In operation 1430, the fault detection circuit may obtain a second output test signal corresponding to the first input test signal from the second output signal. The image processing device may further include a decomposite circuit that obtains the second image signal corresponding to the second raw image signal and the second output test signal corresponding to the first input test signal based on the second output signal, and the fault detection circuit may obtain the second output test signal through the decomposite circuit.

The description of operation 350 described above with reference to FIG. 3 may be similarly modified and applied to the operation of obtaining the second output test signal from the second output signal. For example, one decomposite circuit may receive both the first output signal and the second output signal and obtain the first output test signal and the second output test signal, respectively. For example, the image processing device may include a plurality of decomposite circuits and may receive one of the first output signal and the second output signal from each separate decomposite circuit to obtain the first output test signal and the second output test signal.

In operation 1440, the fault detection circuit may determine whether a fault occurs in at least one of the first ISP and the second ISP based on the first output test signal and the second output test signal. Since the first output test signal and the second output test signal are generated as the same first input test signal is processed by each of the first ISP and the second ISP, when both the first ISP and the second ISP operate normally, the first output test signal and the second output test signal may correspond to each other. For example, when the first output test signal and the second output test signal do not correspond to each other, the fault detection circuit may determine that a fault occurs in at least one of the first ISP and the second ISP.

According to an embodiment, the image processing device may further include a third ISP that generates a third output signal by processing a third input signal. The description of the first input signal, the first output signal, and the first ISP may be similarly modified and applied to the third input signal, the third output signal, and the third ISP. The fault detection circuit may determine a fault output test signal based on the first output test signal, the second output test signal, and the third output test signal. For example, when one output test signal is different from the other two output test signals, the corresponding output test signal may be determined as the fault output test signal. The fault detection circuit may determine an ISP that generates the fault output test signal as an ISP in which a fault occurs.

According to an embodiment, the input interface may transmit a raw image signal corresponding to each of the ISPs that are operating normally, excluding the ISP in which the fault occurs among the plurality of ISPs. Since the raw image signal received by the image processing device 120 is newly distributed to the normally operating ISPs, an image corresponding to the raw image signal may be generated.

According to an embodiment, when the amount of data (or the number of samples) of the raw image signal exceeds the amount of data that may be processed by the normally operating ISPs, the input interface 210 may lower the resolution of the raw image signal and generate a first raw image signal and a second raw image signal for the raw image signal with the lowered resolution. For example, the input interface may sub-sample the raw image signal to reduce the amount of data included in the raw image signal. For example, when the resolution of an image represented by the raw image signal before sub-sampling is 1280 x 720 (HD), the resolution of the image represented by the raw image signal after sub-sampling may be 640 x 720 (the factor of sub-sampling is 2). When a fault occurs in some of the plurality of ISPs included in an ISP group, and the remaining normally operating ISPs process the raw image signal, the amount of data included in the raw image signal may exceed the amount of data that may be processed by the normally operating ISPs, so the amount of data in the raw image signal may be reduced so that an image corresponding to the raw image signal may be generated in real time.

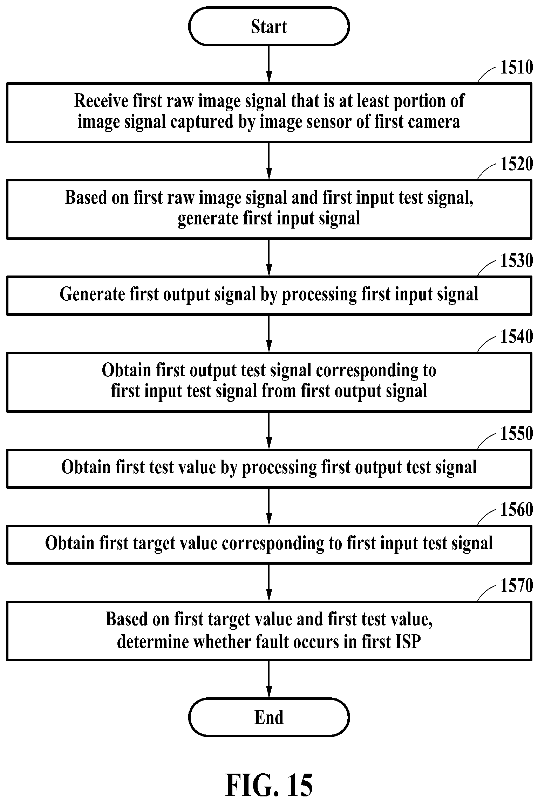

FIG. 15 is a flowchart of a method of detecting an ISP fault according to an embodiment.

Operations 1510 and 1520 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a fault detection circuit (e.g., the fault detection circuit 240 of FIG. 2), and an output interface (e.g., the output interface 250 of FIG. 2).

In operation 1510, the input signal generation circuit may receive a first raw image signal that is at least a portion of an image signal captured by an image sensor of a first camera.

In operation 1520, the input signal generation circuit may generate a first input signal based on the first raw image signal and a first input test signal.

In operation 1530, the first ISP may generate a first output signal by processing the first input signal.

In operation 1540, the fault detection circuit may obtain a first output test signal corresponding to the first input test signal from the first output signal.

In operation 1550, the fault detection circuit may obtain a first test value by processing the first output test signal.

In operation 1560, the fault detection circuit may obtain a first target value corresponding to the first input test signal.

In operation 1570, the fault detection circuit may determine whether a fault occurs in the first ISP based on the first target value and the first test value.

The operations of the input signal generation circuit, the first ISP, and the fault detection circuit described above with reference to FIGS. 3 and 13 may be applied to operations 1510 to 1570.

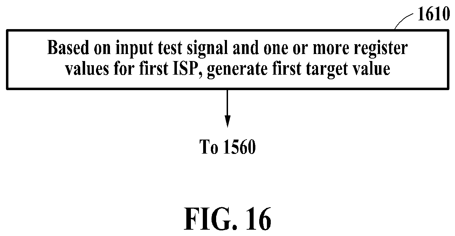

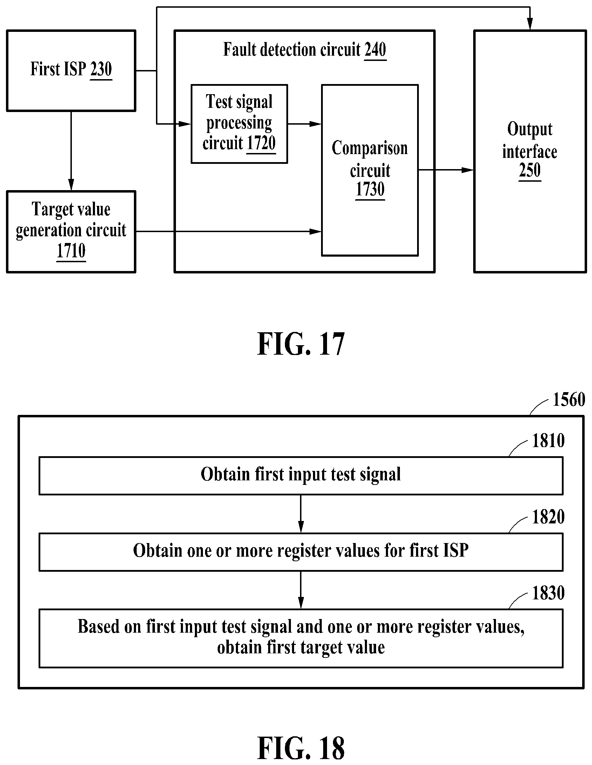

FIG. 16 is a flowchart of a method of generating, by a target value generation circuit, generating a first target value, based on one or more register values for an ISP, according to an embodiment. FIG. 17 is a configuration of a fault detection circuit according to an embodiment.

According to an embodiment, operation 1610 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a fault detection circuit (e.g., the fault detection circuit 240 of FIG. 2), and an output interface (e.g., the output interface 250 of FIG. 2). For example, operation 1610 may be performed before operation 1560 described above with reference to FIG. 15 is performed.

Referring to FIG. 17, the image processing device may further include a target value generation circuit 1710, and the fault detection circuit may include a test signal processing circuit 1720 and a comparison circuit 1730.

In operation 1610, the target value generation circuit 1710 may generate a first target value based on an input test signal and one or more register values for the first ISP. An ISP may be set with various parameter values for processing a raw image signal to generate an optimized image. The various parameter values may be stored (or set) in each of a plurality of registers included in the ISP. A first output test signal may be changed based on the one or more register values for the first ISP. The target value generation circuit 1710 may generate the first target value corresponding to a first test value obtained by processing the first output test signal, based on the first input test signal and the one or more register values for the first ISP.

According to an embodiment, the target value generation circuit 1710 may be a separate processor included in the image processing device. The target value generation circuit 1710 may obtain the first input test signal and the one or more register values for the first ISP and generate the first target value corresponding to the first input test signal and the one or more register values for the first ISP.

The test signal processing circuit 1720 may generate the first test value by processing the first output test signal. The image processing device may further include a decomposite circuit that obtains a first image signal corresponding to a first raw image signal and the first output test signal corresponding to the first input test signal based on a first output signal, and the test signal processing circuit 1720 may obtain the first output test signal through the decomposite circuit. The test signal processing circuit 1720 may obtain the first test value through an algorithm that may verify the integrity of the first output test signal. For example, an operation in which the fault detection circuit obtains the first test value by processing the first output test signal may include an operation in which the test signal processing circuit 1720 of the fault detection circuit obtains a CRC code or an SHA hash for the first output test signal. However, as long as the first test value changes in response to a change in the first output test signal, the algorithm by which the first test value is generated is not limited to the above example.

The comparison circuit 1730 may determine whether a fault occurs in the first ISP by comparing the first test value received by the test signal processing circuit 1720 with the first target value received by the target value generation circuit 1710. For example, when the first test value and the second target value do not correspond to each other, the comparison circuit 1730 may determine that a fault occurs in the first ISP and transmit a signal indicating that a fault occurs in the first ISP to the output interface.

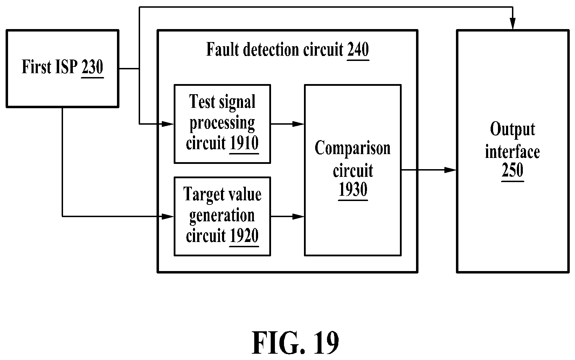

FIG. 18 is a flowchart of a method of obtaining, by a fault detection circuit, a first target value, based on one or more register values for an ISP, according to an embodiment. FIG. 19 is a configuration of a fault detection circuit according to an embodiment.

According to an embodiment, operations 1810 to 1830 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a fault detection circuit (e.g., the fault detection circuit 240 of FIG. 2), and an output interface (e.g., the output interface 250 of FIG. 2). For example, operation 1560 described above with reference to FIG. 15 may include operations 1810 to 1830.

Referring to FIG. 19, the fault detection circuit may further include a test signal processing circuit 1910, a target value generation circuit 1920, and a comparison circuit 1930.

In operation 1810, the target value generation circuit 1920 may obtain a first input test signal.

In operation 1820, the target value generation circuit 1920 may obtain one or more register values for the first ISP.

In operation 1830, the target value generation circuit 1920 may obtain a first target value based on the first input test signal and the one or more register values. The target value generation circuit 1920 may generate the first target value corresponding to a first test value obtained by processing a first output test signal based on the first input test signal and the one or more register values for the first ISP.

According to an embodiment, the target value generation circuit 1920 may store information about a look-up table for the first target value corresponding to the first input test signal and the one or more register values for the first ISP. For example, the target value generation circuit 1920 may receive the first input test signal from the input signal generation circuit, receive the one or more register values for the first ISP from the first ISP, and obtain the first target value using the look-up table.

The test signal processing circuit 1910 may generate the first test value by processing the first output test signal. The image processing device may further include a decomposite circuit that obtains a first image signal corresponding to a first raw image signal and the first output test signal corresponding to the first input test signal based on the first output signal, and the test signal processing circuit 1910 may obtain the first output test signal through the decomposite circuit. The test signal processing circuit 1910 may obtain the first test value through an algorithm that may verify the integrity of the first output test signal.

The comparison circuit 1930 may determine whether a fault occurs in the first ISP by comparing the first test value received from the test signal processing circuit 1910 with the first target value received from the target value generation circuit 1920. For example, when the first test value and the second target value do not correspond to each other, the comparison circuit 1930 may determine that a fault occurs in the first ISP and transmit a signal indicating that a fault occurs in the first ISP to the output interface.

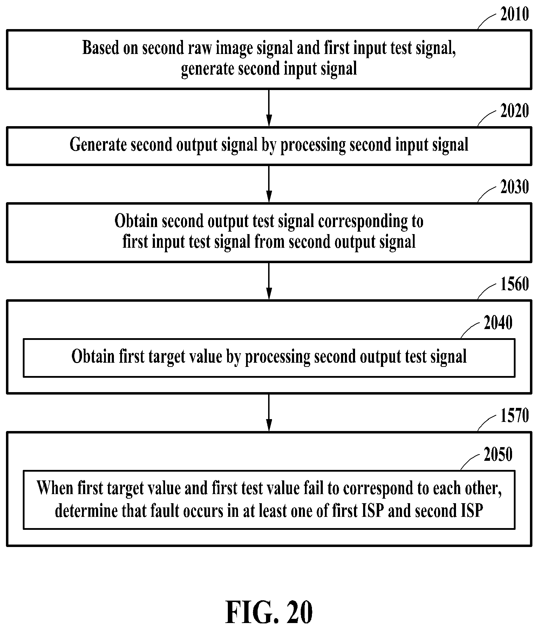

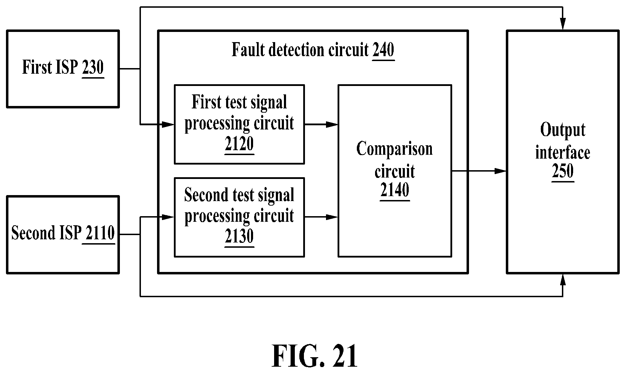

FIG. 20 is a flowchart of a method of obtaining, by a fault detection circuit, a method of obtaining a first target value by processing a second output test signal. FIG. 21 is a configuration of a fault detection circuit according to an embodiment.

According to an embodiment, operations 2010 to 2050 may be performed by an image processing device (e.g., the image processing device 120 of FIGS. 1 and 2). The image processing device may include an input interface (e.g., the input interface 210 of FIG. 2), an input signal generation circuit (e.g., the input signal generation circuit 220 of FIG. 2), a first ISP (e.g., the first ISP 230 of FIG. 2), a second ISP 2110, a fault detection circuit (e.g., the fault detection circuit 240 of FIG. 2), and an output interface (e.g., the output interface 250 of FIG. 2). For example, operations 2010 to 2030 may be performed before operation 1560 described above with reference to FIG. 15 is performed, operation 1560 described above with reference to FIG. 15 may include operation 2040, and operation 1570 described above with reference to FIG. 15 may include operation 2050.

Referring to FIG. 21, the image processing device may further include the second ISP 2110, and the fault detection circuit may include a first test signal processing circuit 2120, a second test signal processing circuit 2130, and a comparison circuit 2140.

In operation 2010, the input signal generation circuit may generate a second input signal based on a second raw image signal and a first input test signal. The description of the operation of the input signal generation circuit described above with reference to FIG. 14 may be applied to the operation of the input signal generation circuit.

In operation 2020, the second ISP may generate a second output signal by processing the second input signal.

In operation 2030, the second test signal processing circuit 2130 may obtain a second output test signal corresponding to the first input test signal from the second output signal. The image processing device may further include a decomposite circuit that obtains a second image signal corresponding to the second raw image signal and the second output test signal corresponding to the first input test signal based on the second output signal, and the second test signal processing circuit 2130 may obtain the second output test signal through the decomposite circuit.

The first test signal processing circuit 2120 may generate a first test value by processing the first output test signal. The image processing device may further include a decomposite circuit that obtains a first image signal corresponding to a first raw image signal and a first output test signal corresponding to the first input test signal based on the first output signal, and the first test signal processing circuit 2120 may obtain the second output test signal through the decomposite circuit. The first test signal processing circuit 2120 may obtain the first test value through an algorithm that may verify the integrity of the first output test signal.

In operation 2040, the second test signal processing circuit 2130 may obtain the first target value by processing the second output test signal. The second test signal processing circuit 2130 may obtain the first target value corresponding to the first test value by using the same algorithm as the algorithm used to process the first output test signal in the first test signal processing circuit 2120.

In operation 2050, the comparison circuit 2140 may determine that a fault occurs in at least one of the first ISP and the second ISP when the first target value and the first test value do not correspond to each other. Since the first output test signal and the second output test signal are generated as the same first input test signal is processed in each of the first ISP and the second ISP, when both the first ISP and the second ISP operate normally, the first output test signal and the second output test signal may correspond to each other. The first test value and the first target value generated by processing the first output test signal and the second output test signal, which correspond to each other, with the same algorithm may correspond to each other. For example, when the first test value and the first target value do not correspond to each other, the comparison circuit 2140 may determine that a fault occurs in at least one of the first ISP and the second ISP and transmit a signal indicating that a fault occurs in at least one of the first ISP and the second ISP to the output interface.

The methods according to the embodiments described herein may be recorded in non-transitory computer-readable media including program instructions to implement various operations of the embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) discs and digital video discs (DVDs); magnetooptical media such as optical discs; and hardware devices that are specifically configured to store and perform program instructions, such as ROM, random access memory (RAM), flash memory, and the like. Examples of program instructions include both machine code, such as produced by a compiler, and files containing higher-level code that may be executed by the computer using an interpreter. The hardware devices described above may be configured to act as one or more software modules in order to perform the operations of the embodiments, or vice versa.

The software may include a computer program, a piece of code, an instruction, or one or more combinations thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

Although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents to the claims are also within the scope of the following claims.

## Claims

1. A method of determining an image signal processor (ISP) fault, performed by an image processing device, the method comprising:
receiving a first raw image signal that is at least a portion of an image signal captured by an image sensor of a first camera;
based on the first raw image signal and a first input test signal, generating a first input signal;
generating, by a first ISP, a first output signal by processing the first input signal;
obtaining a first output test signal corresponding to the first input test signal from the first output signal; and
based on the first output test signal, determining whether a fault occurs in the first ISP.

2. The method of claim 1, wherein the determining of whether the fault occurs in the first ISP, based on the first output test signal comprises:
obtaining a first test value by processing the first output test signal;
obtaining a first target value corresponding to the first input test signal;
determining whether the first test value corresponds to the first target value; and
when the first test value fails to correspond to the first target value, determining that a fault occurs in the first ISP.

3. The method of claim 1, wherein the first target value is generated by a processor comprised in the image processing device.

4. The method of claim 1, wherein the first target value is generated based on the first input test signal and one or more register values for the first ISP.

5. The method of claim 1, wherein the generating of the first input signal, based on the first raw image signal and the first input test signal, comprises:
obtaining a test pattern activation signal corresponding to a portion of a vertical blanking interval (VBI) of the first raw image signal; and
based on the first raw image signal, the first input test signal, and the test pattern activation signal, generating the first input signal.

6. The method of claim 5, wherein the first input test signal comprises a plurality of lines.

7. The method of claim 6, wherein
the first input test signal comprises a dummy line comprising at least one line, and
the obtaining of the first output test signal corresponding to the first input test signal from the first output signal comprises:
obtaining a first decomposed output signal corresponding to the first input test signal from the first output signal; and
obtaining, as the first output test signal, remaining lines obtained by excluding lines corresponding to the dummy line from the first decomposed output signal.

8. The method of claim 1, wherein the generating of the first input signal, based on the first raw image signal and the first input test signal, comprises:
obtaining a test pattern activation signal corresponding to a portion of a horizontal blanking interval (HBI) of the first raw image signal; and
based on the first raw image signal, the first input test signal, and the test pattern activation signal, generating the first input signal.

9. The method of claim 8, wherein the first input test signal comprises a plurality of samples.

10. The method of claim 9, wherein
the first input test signal comprises a dummy sample comprising at least one sample, and
the obtaining of the first output test signal corresponding to the first input test signal from the first output signal comprises:
obtaining a first decomposed output signal corresponding to the first input test signal from the first output signal; and
obtaining, as the first output test signal, remaining pixels obtained by excluding dummy pixels corresponding to the dummy sample from pixels of the first decomposed output signal.

11. The method of claim 1, further comprising:
based on a second raw image signal and the first input test signal, generating a second input signal;
generating, by a second ISP, a second output signal by processing the second input signal; and
obtaining a second output test signal corresponding to the first input test signal from the second output signal,
wherein the determining of whether the fault occurs in the first ISP, based on the first output test signal, comprises, based on the first output test signal and the second output test signal, determining whether a fault occurs in at least one of the first ISP and the second ISP.

12. A non-transitory computer-readable storage medium storing instructions that, when executed by a processor, cause the processor to perform the method of claim 1.

13. An image processing device comprising:
an input signal generation circuit configured to receive a first raw image signal that is at least a portion of an image signal captured by an image sensor of a first camera and generate, based on the first raw image signal and a first input test signal, a first input signal;
a first image signal processor (ISP) configured to generate a first output signal by processing the first input signal; and
a fault detection circuit configured to obtain a first output test signal corresponding to the first input test signal from the first output signal and determine, based on the first output test signal, whether a fault occurs in the first ISP.

14. The image processing device of claim 13, further comprising:
a decomposite circuit configured to obtain, based on the first output signal, a first image signal corresponding to the first raw image signal and the first output test signal corresponding to the first input test signal.

15. The image processing device of claim 13, further comprising:
a second ISP configured to generate a second output signal by processing a second input signal,
wherein the input signal generation circuit is configured to generate, based on the first raw image signal and the first input test signal, the second input signal, and
wherein the fault detection circuit is configured to obtain a second output test signal corresponding to the first input test signal from the second output signal and determine, based on the first output test signal and the second output test signal, whether a fault occurs in at least one of the first ISP and the second ISP.
